# EUROPÄISCHE PATENTSCHRIFT

(11) **EP 0 570 930 B1**
(45) Veröffentlichungstag und Bekanntmachung des Hinweises auf die Patenterteilung: **13.12.1995**
(21) Anmeldenummer: 93108128.5
(22) Anmeldetag: 18.05.1993
(51) Int. Cl.: F04D 29/32

(54) **Aus einem Thermoplast gespritztes Axiallüfterrad und Verfahren zu seiner Herstellung**
An injection-moulded thermoplastic axial fan and its method of manufacture
Ventilateur axial moulé d'un thermoplastique et méthode pour sa fabrication

(30) Priorität: 20.05.1992 DE 4216654
(43) Veröffentlichungstag der Anmeldung: 24.11.1993
(73) Patentinhaber: THERMOPLAST-TECHNIK GESELLSCHAFT FÜR KUNSTSTOFFVERARBEITUNG m.b.H., D-36124 Eichenzell (DE)
(72) Erfinder: Müller, Theodor, D-6405 Eichenzell (DE); Hartung, Peter, D-6405 Eichenzell-Rothemann (DE)
(74) Vertreter: Schlagwein, Udo, Dipl.-Ing.

(56) Entgegenhaltungen:
- FR-A- 1 105 208
- FR-A- 1 338 996
- FR-A- 2 445 457
- US-A- 2 454 200

## Beschreibung

Die Erfindung betrifft ein aus einem Thermoplast gespritztes Axiallüfterrad, welches einen Mitnehmer und einen Riemenlaufring hat und bei dem diese Teile durch Einsetzen in ein Spritzgießwerkzeug und Umspritzen mit dem Thermoplast mit dem Axiallüfterrad verbunden sind. Weiterhin betrifft die Erfindung ein Verfahren zur Herstellung eines solchen Axiallüfterrades.

Axiallüfterräder der vorstehenden Art werden insbesondere in Kraftfahrzeugen hinter dem Kühler für die Kühlflüssigkeit der Brennkraftmaschine eingesetzt. Oftmals ist es dabei erforderlich, ein Axiallüfterrad statt unmittelbar von einem Elektromotor mittelbar über einen Treibriemen anzutreiben. Das ist insbesondere der Fall, wenn man bei einem Kühler zwei Axiallüfterräder nebeneinander anordnet, und dabei ein Axiallüfterrad unmittelbar von dem Elektromotor antreibt und das andere mittels eines Treibriemens mit dem angetriebenen Axiallüfterrad verbindet.

Bei den bisherigen Axiallüfterrädern sind der Mitnehmer und der Riemenlaufring als ein einziges Aluminiumdruckguß-Bauteil ausgebildet. Dadurch ergibt es sich zwangsläufig, daß der Riemenlaufring koaxial zum Mitnehmer verläuft. Da der Mitnehmer beim montierten Axiallüfterrad im Preß- oder Schiebesitz auf einer Welle gehalten wird, ist es erforderlich, daß er aus Metall besteht. Ein weiteres Erfordernis besteht darin, daß die Drehachse des Mitnehmers möglichst genau rechtwinklig zur Haupterstreckungsebene des Axiallüfterrades verläuft. Ist das nicht der Fall, dann kommt es beim Drehen des Axiallüfterrades zu Abstandsänderungen der Stirnflächen des Axiallüfterrades in Axialrichtung, also zu einem nicht exakten Planlauf. Da bei heutigen Axiallüfterrädern aus Gründen eines hohen Wirkungsgrades das Lüfterradgehäuse bis unmittelbar an das Axiallüfterrad heranreicht, kann es durch einen ungenügenden Planlauf zu Berührungen zwischen Axiallüfterrad und Lüfterradgehäuse kommen.

In der Praxis mußte bei den bekannten Lüfterrädern immer wieder festgestellt werden, daß der Planlauf oftmals nicht befriedigend ist. Das macht es erforderlich, jedes Lüfterrad nach seiner Herstellung im Spritzgießverfahren zu vermessen, um die nicht ausreichend genauen Lüfterräder aussortieren zu können.

Wenn man bei den bisherigen Lüfterrädern einen exakten Planlauf erreichen will, dann muß man den Riemenlaufring an zwei gegenüberliegenden Stirnflächen mechanisch bearbeiten. Würde man nur den Mitnehmer an seinen Stirnflächen drehbearbeiten, dann käme es im Spritzgießwerkzeug bei den auftretenden Spritzdrücken bis 1000 bar zu einem Ausweichen des Riemenlaufringes bis zu einer Anlage gegen eine Stirnfläche des Spritzgießwerkzeugs und damit zu einer Fehlausrichtung des Mitnehmers. Die Drehbearbeitung des Riemenlaufringes ist jedoch relativ aufwendig und macht es erforderlich, daß er mit einem relativ hohen Übermaß im Spritzgußverfahren hergestellt wird, so daß seine Stirnflächen auch bei ungünstigen Toleranzen völlig plan gedreht werden können.

Der Erfindung liegt das Problem zugrunde, ein Axiallüfterrad der eingangs genannten Art so auszubilden, daß sich mit möglichst geringem Fertigungsaufwand ein guter Planlauf erzielen läßt. Weiterhin soll ein Verfahren zur Herstellung eines solchen Axiallüfterrades geschaffen werden.

Das erstgenannte Problem wird erfindungsgemäß dadurch gelöst, daß der Mitnehmer und der Riemenlaufring als zwei bei der Herstellung des Axiallüfterrades separat in Wechseleinsätze des Spritzgießwerkzeug einsetzbare Teile ausgebildet sind und daß der Mitnehmer planparallele Stirnseiten hat, die senkrecht zur Mitnehmerachse ausgeführt sind und bei der Herstellung des Axiallüfterrades gegen Seitenflächen der Wechseleinsätze anliegen und verspannt sind.

Durch diese erfindungsgemäße Trennung des Mitnehmers von dem Riemenlaufring braucht man nur noch die durchmesserkleinen Stirnflächen des Mitnehmers mit hoher Präzision herzustellen und diesen Mitnehmer in dem Spritzgießwerkzeug zwischen zwei Seitenflächen des Werkzeugs einzuspannen, damit es zu einer exakten Ausrichtung des Mitnehmers relativ zum Axiallüfterrad kommt. Da der Riemenlaufring nicht mehr mit dem Mitnehmer verbunden ist, führen Ungenauigkeiten des Riemenlaufringes nicht mehr zu Planlauffehlern des Axiallüfterrades. Ein weiterer Vorteil der Trennung von Mitnehmer und Riemenlaufring liegt darin, daß unterschiedliche Riemenlaufringe und Mitnehmer miteinander kombiniert werden können, um sich unterschiedlichen Gegebenheiten anzupassen.

Bei der Herstellung des Axiallüfterrades im Spritzgießwerkzeug kommt es durch große Querschnitte zu einem ausreichend starken Materialfluß zwischen dem Anguß und den äußeren Bereichen des Axiallüfterrades, wenn gemäß einer vorteilhaften Weiterbildung der Erfindung zur Verbindung des den Mitnehmer umgebenden Bereiches mit dem radial außerhalb des Riemenlaufringes liegenden Bereich des Axiallüfterrades radiale Rippen vorgesehen sind.

Besonders vorteilhaft ist es, wenn der Riemenlaufring ein Spritzgießteil aus Kunststoff ist. Hierdurch ist das Axiallüfterrad besonders kostengünstig herstellbar. Weiterhin wird sein Gewicht geringer als bei einem Axiallüfterrad mit einem Riemenlaufring aus Metall. Die Gewichtsverringerung führt abgesehen von den sich daraus ergebenden allgemeinen Vorteilen dazu, daß eine ungleiche Massenverteilung zu einer relativ geringen Unwucht führt.

Günstig für die Recylebarkeit des Lüfterrades ist es, wenn der Riemenlaufring aus dem gleichen Thermoplast besteht wie das Axiallüfterrad.

Der Riemenlaufring kann trotz der beim Umspritzen auftretenden hohen Drücke relativ dünnwandig und deshalb von geringer Festigkeit sein, wenn er an einer Stirnseite eine umlaufende Nut zum Übergreifen eines entsprechenden, umlaufenden, mit radialen Ausnehmungen für die Rippen versehenen Vorsprunges einer Seite des Spritzgießwerkzeugs hat und auf der gegenüberliegenden Seite zum Aufsetzen auf einen umlaufenden Vorsprung der anderen Seite des Spritzgießwerkzeugs ausgebildet ist.

Das zweitgenannte Problem, nämlich die Schaffung eines Verfahrens zur Herstellung eines aus einem Thermoplast gespritzten Axiallüfterrades der vorstehenden Art, wird erfindungsgemäß dadurch gelöst, daß der Mitnehmer und der Riemenlaufring als zwei separate Bauteile in das Spritzgießwerkzeug für das Axiallüfterrad eingesetzt werden und daß nur der Mitnehmer an seinen beiden Stirnseiten mit hoher Präzision hergestellt und mit diesen Stirnseiten zwischen zwei gegenüberliegende Seiten der Spritzgießform eingespannt wird.

Durch diese Verfahrensweise erniedrigen sich die Herstellungskosten des Axiallüfterrades beträchtlich, weil sich ein ausreichend genauer Planlauf allein durch die präzise Herstellung der beiden Stirnflächen des durchmesserkleinen Mitnehmers erreichen läßt. Dank des erfindungsgemäßen Verfahrens kann auf eine mechanische Bearbeitung der Stirnflächen des Riemenlaufringes verzichtet werden.

Für das Einströmen des Thermoplastes in die äußeren Bereiche des Spritzgießwerkzeugs stehen ausreichend große Querschnitte zur Verfügung, wenn gemäß einer vorteilhaften Weiterbildung der Erfindung zur Verbindung des den Mitnehmer umgebenden Bereiches mit dem radial außerhalb des Riemenlaufringes liegenden Bereich des Axiallüfterrades radiale Rippen vorgesehen werden.

Besonders gering sind die Herstellungskosten, wenn der Riemenlaufring vor seinem Umspritzen im Spritzgießwerkzeug als vom Axiallüfterrad separates Bauteil im Spritzgießverfahren aus Kunststoff hergestellt wird. Ein solcher Riemenlaufring hat zusätzlich den Vorteil, leicht zu sein und braucht beim Wiederverwerten nicht vom Axiallüfterrad entfernt zu werden, was insbesondere dann gilt, wenn er aus identischem Kunststoff besteht wie das Axiallüfterrad.

Ein Einwirken des Druckes in dem Spritzgießwerkzeug auf große Flächen des Riemenlaufringes, was bei nicht ausreichenden Wandstärken zu einer Zerstörung des Riemenlaufringes führen kann, läßt sich auf einfache Weise dadurch vermeiden, daß der Riemenlaufring an einer Stirnseite mit einer umlaufenden Nut zum Übergreifen eines entsprechenden, umlaufenden, mit radialen Ausnehmungen für die Rippen versehenen Vorsprunges eines Wechseleinsatzes des Spritzgießwerkzeugs versehen und auf der gegenüberliegenden Seite zum Aufsetzen auf einen umlaufenden Vorsprung des anderen Wechseleinsatzes des Spritzgießwerkzeugs ausgebildet wird.

Die Erfindung läßt zahlreiche Ausführungsformen zu. Zu ihrer weiteren Verdeutlichung wird nachfolgend auf die Zeichnung Bezug genommen. Diese zeigt in
- Fig.1: einen axialen Schnitt durch ein Axiallüfterrad nach der Erfindung,
- Fig.2: eine Draufsicht auf das Axiallüfterrad,
- Fig.3: einen Schnitt durch den mittleren Bereich eines Spritzgießwerkzeugs zur Herstellung des Axiallüfterrades.

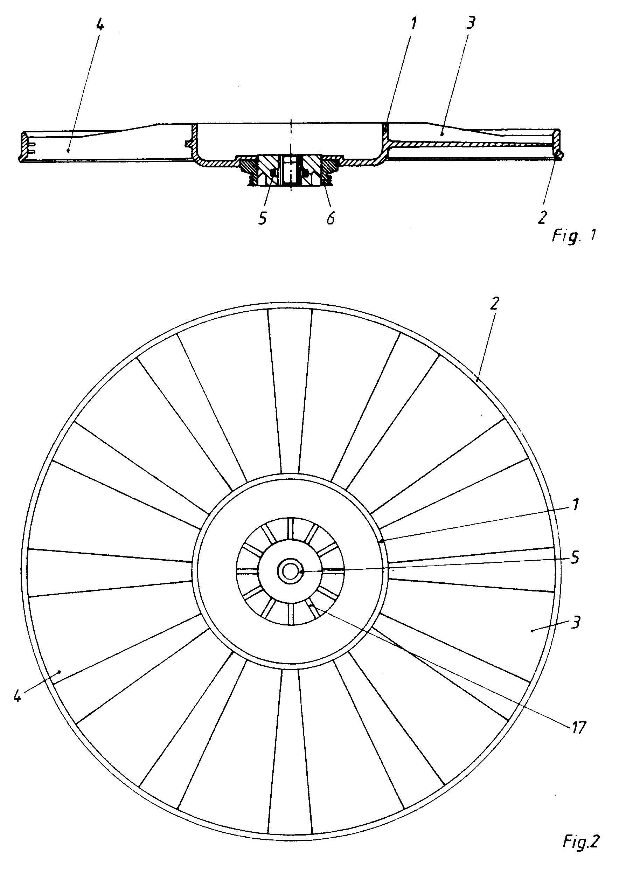

Das in den Figuren 1 und 2 gezeigte Axiallüfterrad hat eine Nabe 1 und einen äußeren Ring 2 und diese Teile miteinander verbindende Flügel, wie zum Beispiel die Flügel 3, 4. In die Nabe 1 ist ein Mitnehmer 5 aus Metall, üblicherweise Aluminiumdruckguß, eingesetzt. Weiterhin enthält die Nabe 1 auf der in Figur 1 gesehen unteren Seite einen in Figur 2 nicht zu sehenden Riemenlaufring 6, der vorzugsweise aus demselben Thermoplast besteht wie die Nabe 1, die Flügel 3, 4 und der Ring 2, jedoch separat vom Axiallüfterrad durch Spritzgießen hergestellt wird.

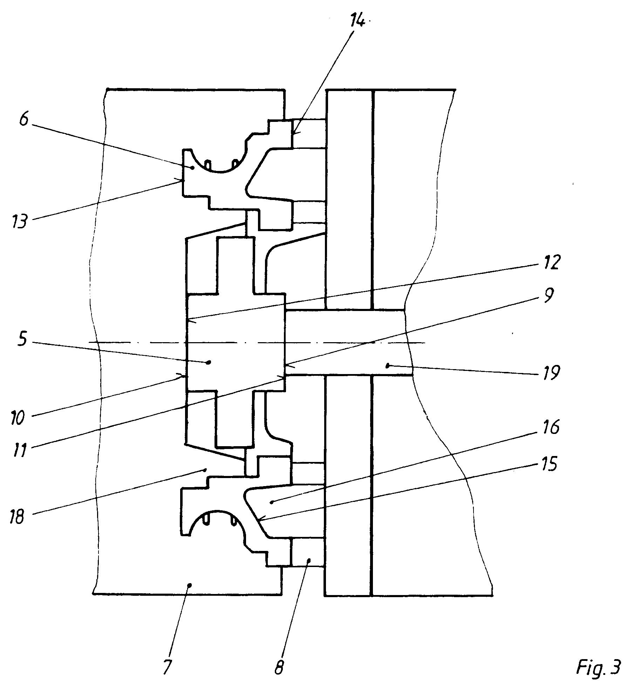

In Figur 3 sind zwei aufeinanderstoßende Enden von Wechseleinsätzen 7, 8 eines Spritzgießwerkzeugs im Schnitt dargestellt. Diese Wechseleinsätze 7, 8 nehmen den Mitnehmer 5 auf einem Dorn 19 derart auf, daß dieser mit mechanisch bearbeiteten Stirnseiten 9, 10 gegen jeweils eine gegenüberliegende Seitenfläche 11, 12 anliegt. Wenn in Figur 3 gesehen das Thermoplast von links her eingespritzt wird, dann kann durch diese Gestaltung der Mitnehmer 5 seine exakte Position zwischen den Seitenflächen 9, 10 nicht verändern, so daß seine Längsachse exakt zu der des übrigen Bereiches des Axiallüfterrades ausgerichtet bleibt.

Bei dem Riemenlaufring 6 handelt es sich um ein Teil aus demselben Thermoplast wie das Axiallüfterrad. Er liegt ebenfalls mit seinen Stirnseiten 13, 14 gegen die Seiten 11 und 12 der Wechseleinsätze 7 und 8 an. Die Genauigkeit seiner Stirnseiten beeinflußt jedoch nicht die Ausrichtung des Mitnehmers 5, weil der Riemenlaufring 6 ein vom Mitnehmer 5 unabhängiges Bauteil ist.

Die Figur 3 läßt zusätzlich erkennen, daß der Riemenlaufring 6 an seiner Stirnseite 14 eine umlaufende Nut 15 hat, in welche ein entsprechend gestalteter, umlaufender Vorsprung 16 des Wechseleinsatzes 8 greift. Dieser Vorsprung 16 hat nicht dargestellte radiale Ausnehmungen, so daß in Figur 2 dargestellte, radiale Rippen 17 entstehen.

Die Seitenfläche 12 des Wechseleinsatzes 7 hat ebenfalls einen umlaufenden Vorsprung 18, auf den der Riemenlaufring 6 mit seiner Innenfläche aufsitzt.

### Bezugszeichenliste

- 1: Nabe
- 2: Ring
- 3: Flügel
- 4: Flügel
- 5: Mitnehmer
- 6: Riemenlaufring
- 7: Wechseleinsatz
- 8: Wechseleinsatz
- 9: Stirnseite
- 10: Stirnseite
- 11: Seitenfläche
- 12: Seitenfläche
- 13: Stirnseite
- 14: Stirnseite
- 15: Nut
- 16: Vorsprung
- 17: Rippe
- 18: Vorsprung
- 19: Dorn

## Patentansprüche

1. Aus einem Thermoplast gespritztes Axiallüfterrad, welches einen Mitnehmer (5) und einen Riemenlaufring (6) hat und bei dem diese Teile durch Einsetzen in ein Spritzgießwerkzeug und Umspritzen mit dem Thermoplast mit dem Axiallüfterrad verbunden sind, **dadurch gekennzeichnet**, daß der Mitnehmer (5) und der Riemenlaufring (6) als zwei bei der Herstellung des Axiallüfterrades separat in Wechseleinsätze (7, 8) des Spritzgießwerkzeugs einsetzbare Teile ausgebildet sind und daß der Mitnehmer (5) planparallele Stirnseiten (9, 10) hat, die senkrecht zur Mitnehmerachse ausgeführt sind und bei der Herstellung des Axiallüfterrades gegen Seitenflächen (11, 12) der Wechseleinsätze (7, 8) anliegen und verspannt sind.

2. Axiallüfterrad nach Anspruch 1, **dadurch gekennzeichnet**, daß zur Verbindung des den Mitnehmer (5) umgebenden Bereiches mit dem radial außerhalb des Riemenlaufringes (6) liegenden Bereich des Axiallüfterrades radiale Rippen (17) vorgesehen sind.

3. Axiallüfterrad nach den Ansprüchen 1 oder 2, **dadurch gekennzeichnet**, daß der Riemenlaufring (6) ein Spritzgießteil aus Kunststoff ist.

4. Axiallüfterrad nach Anspruch 3, **dadurch gekennzeichnet**, daß der Riemenlaufring (6) aus dem gleichen Thermoplast wie das Axiallüfterrad besteht.

5. Axiallüfterrad nach Anspruch 3 oder 4, **dadurch gekennzeichnet**, daß der Riemenlaufring (6) an einer Stirnseite eine umlaufende Nut (15) zum Übergreifen eines entsprechenden, umlaufenden, mit radialen Ausnehmungen für die Rippen (17) versehenen Vorsprunges (16) eines Wechseleinsatzes (8) des Spritzgießwerkzeugs hat und auf der gegenüberliegenden Seite zum Aufsetzen auf einen umlaufenden Vorsprung (18) des anderen Wechseleinsatzes (7) ausgebildet ist.

6. Verfahren zur Herstellung eines aus einem Thermoplast gespritzten Axiallüfterrades, bei dem ein Mitnehmer und ein Riemenlaufring in das Spritzgießwerkzeug eingesetzt und zur Verbindung mit dem Axiallüfterrad umspritzt werden, **dadurch gekennzeichnet**, daß der Mitnehmer und der Riemenlaufring als zwei separate Bauteile in zwei Wechseleinsätze des Spritzgießwerkzeugs für das Axiallüfterrad eingesetzt werden und daß nur der Mitnehmer an seinen beiden Stirnseiten mit hoher Präzision hergestellt und mit diesen Stirnseiten zwischen zwei gegenüberliegenden Seiten der Spritzgießform eingespannt wird.

7. Verfahren nach Anspruch 6, **dadurch gekennzeichnet**, daß zur Verbindung des den Mitnehmer umgebenden Bereiches mit dem radial außerhalb des Riemenlaufringes liegenden Bereich des Axiallüfterrades radiale Rippen vorgesehen werden.

8. Verfahren nach den Ansprüchen 6 oder 7, **dadurch gekennzeichnet**, daß der Riemenlaufring vor seinem Umspritzen im Spritzgießwerkzeug als vom Axiallüfterrad separates Bauteil im Spritzgießverfahren aus Kunststoff hergestellt wird.

9. Verfahren nach den Ansprüchen 6 oder 7 oder 8, **dadurch gekennzeichnet**, daß der Riemenlaufring an einer Stirnseite mit einer umlaufenden Nut zum Übergreifen eines entsprechenden, umlaufenden, mit radialen Ausnehmungen für die Rippen versehenen Vorsprunges eines Wechseleinsatzes des Spritzgießwerkzeugs versehen und auf der gegenüberliegenden Seite zum Aufsetzen auf einen umlaufenden Vorsprung des anderen Wechseleinsatzes des Spritzgießwerkzeugs ausgebildet wird.

## Claims

1. Injection-moulded thermoplastic axial fan which has a driver (5) and a belt-type bearing race (6) and in which these parts are connected to the axial fan by insertion into an injection moulding tool and by being surrounded with the thermoplastic material, characterized in that the driver (5) and the belt-type bearing race (6) are designed as two parts which can be inserted separately into interchangeable inserts (7, 8) of the injection moulding tool during production of the axial fan and in that the driver (5) has plane, parallel end faces (9, 10) which are designed perpendicularly to the driver axis and rest and are secured against lateral faces (11, 12) of the interchangeable inserts (7, 8) during production of the axial fan.

2. Axial fan according to Claim 1, characterized in that radial ribs (17) are provided for connecting the region surrounding the driver (5) to the region of the axial fan located radially outside the belt-type bearing race (6).

3. Axial fan according to Claims 1 or 2, characterized in that the belt-type bearing race (6) is a plastics injection moulding.

4. Axial fan according to Claim 3, characterized in that the belt-type bearing race (6) consists of the same thermoplastic material as the axial fan.

5. Axial fan according to Claim 3 or 4, characterized in that the belt-type bearing race (6) has, on one end face, a peripheral groove (15) for embracing a corresponding peripheral projection (16), provided with radial recesses for the ribs (17), of an interchangeable insert (8) of the injection moulding tool and is designed, on the opposite side, for application on a peripheral projection (18) of the other interchangeable insert (7).

6. Process for producing an injection-moulded thermoplastic axial fan in which a driver and a belt-type bearing race are inserted into the injection moulding tool and are surrounded for connection to the axial fan, characterized in that the driver and the belt-type bearing race are inserted as two separate components into two interchangeable inserts of the injection moulding tool for the axial fan and in that only the driver is produced with high precision at its two end faces and is fixed with these end faces between two opposing sides of the mould.

7. Process according to Claim 6, characterized in that radial ribs are provided for connecting the region surrounding the driver to the region of the axial fan located radially outside the belt-type bearing race.

8. Process according to Claims 6 or 7, characterized in that the belt-type bearing race is produced from plastics material by the injection moulding process as a component separate from the axial fan before being surrounded in the injection moulding tool.

9. Process according to Claims 6 or 7 and 8, characterized in that the belt-type bearing race is provided on one end face with a peripheral groove for embracing a corresponding peripheral projection, provided with radial recesses for the ribs, of an interchangeable insert of the injection moulding tool and is designed, on the opposite side, for application on a peripheral projection of the other interchangeable insert of the injection moulding tool.

## Revendications

1. Roue de ventilateur axial en thermoplastique injecté, comportant un taquet d'entrainement et une poulie à courroie, ces parties étant reliées à la roue de ventilateur axial par insertion dans l'outillage de moulage, et par injection de thermoplastique, caractérisée en ce que le taquet d'ancrage (5) et la poulie à courroie (6) sont conçus en deux parties inserrables séparément dans des cavités interchangeables (7,8) de l'outillage de moulage par injection lors de la réalisation de la roue de ventilateur axial, et en ce que le taquet d'ancrage (5) comporte des surfaces frontales (9,10) planes et parallèles, qui s'étendent perpendiculairement à l'axe dudit taquet et qui sont disposées et appliquées contre les parois latérales (11,12) des cavités interchangeables (7,8) lors de la réalisation de la roue de ventilateur axial.

2. Roue de ventilateur axial selon la revendication 1, caractérisée en ce que des nervures radiales (7) sont prévues pour réunir la zone périphérique du taquet d'ancrage (5) à la zone de ventilateur située extérieurement à la poulie (6) dans la direction radiale.

3. Roue de ventilateur axial selon l'une des revendications 1 ou 2, caractérisée en ce que la poulie à courroie (6) est une pièce moulée par injection.

4. Roue de ventilateur axial selon la revendication 3, caractérisée en ce que la poulie à courroie (6) est fabriquée dans le même matériau plastique que la roue de ventilateur axial.

5. Roue de ventilateur axial selon la revendication 3 ou 4, caractérisée en ce que la poulie à courroie (6) comporte sur une paroi frontale, une gorge périphérique (15) pour recouvrir une partie correspondante en saillie (16) sur la périphérie d'une cavité interchangeable (8) et comportant des creux de direction radiale pour les nervures, ladite poulie étant conformée sur son autre côté pour s'appuyer sur une avancée (18) de l'autre cavité interchangeable (7).

6. Procédé pour la réalisation d'une roue de ventilateur axial en thermoplastique injecté comportant un taquet d'entrainement et une roue à courroie inserrés dans l'outillage de moulage par injection, et reliés à la roue de ventilateur par injection, caractérisé en ce que le taquet d'entrainement et la poulie a courroie sont inserrés séparément dans des cavités interchangeables de l'outillage de moulage par injection de la roue de ventilateur axial, et en ce qu'uniquement le taquet d'entrainement a des faces frontales fabriquées avec une grande précision, faces frontales par lesquelles il est maintenu entre deux côtés se faisant face de la forme de moulage.

7. Procédé selon la revendication 6, caractérisé en ce que des nervures radiales sont prévues pour réunir la zone périphérique du taquet d'ancrage à la zone de la roue de ventilateur située extérieurement à la poulie dans la direction radiale.

8. Procédé selon la revendication 6 ou 7, caractérisé en ce qu'avant d'être moulée par injection dans l'outillage de moulage par injection, la roue à courroie est réalisée en plastique comme une pièce de la roue de ventilateur dans le procédé de moulage par injection.

9. Procédé selon les revendications 6 ou 7 ou 8, caractérisé en ce que la poulie a courroie est pourvue d'une gorge périphérique sur une paroi frontale pour recouvrir une partie correspondante en saillie sur la périphérie d'une cavité interchangeable et est conformée sur son autre côté pour s'appuyer sur une avancée de l'autre cavité interchangeable.
